# EUROPEAN PATENT SPECIFICATION

(11) **EP 0 501 585 B1**
(45) Date of publication and mention of the grant of the patent: **25.01.1995**
(21) Application number: 92200552.5
(22) Date of filing: 25.02.1992
(51) Int. Cl.: B60B 35/10, B60G 21/04

(54) **Agricultural vehicle**
Landwirtschaftsfahrzeug
Véhicule agricole

(30) Priority: 01.03.1991 BE 9100199
(43) Date of publication of application: 02.09.1992
(73) Proprietor: CEBECO AGRIFAC B.V., NL-8332 JA Steenwijk (NL)
(72) Inventor: Blaauw, Doeko, NL-8334 RT Steenwijk (NL)
(74) Representative: Konings, Lucien Marie Cornelis Joseph

(56) References cited:
- DE-A- 2 018 070
- FR-A- 1 427 919
- FR-A- 2 183 416
- GB-A- 1 050 526
- NL-A- 8 600 830
- US-A- 3 899 037
- US-A- 3 917 306

## Description

The invention relates to an agricultural vehicle as indicated in the preamble of claim 1.

Such vehicle is disclosed in FR-A-2183416.

Said vehicle can be used on fields having different mutual row distances.

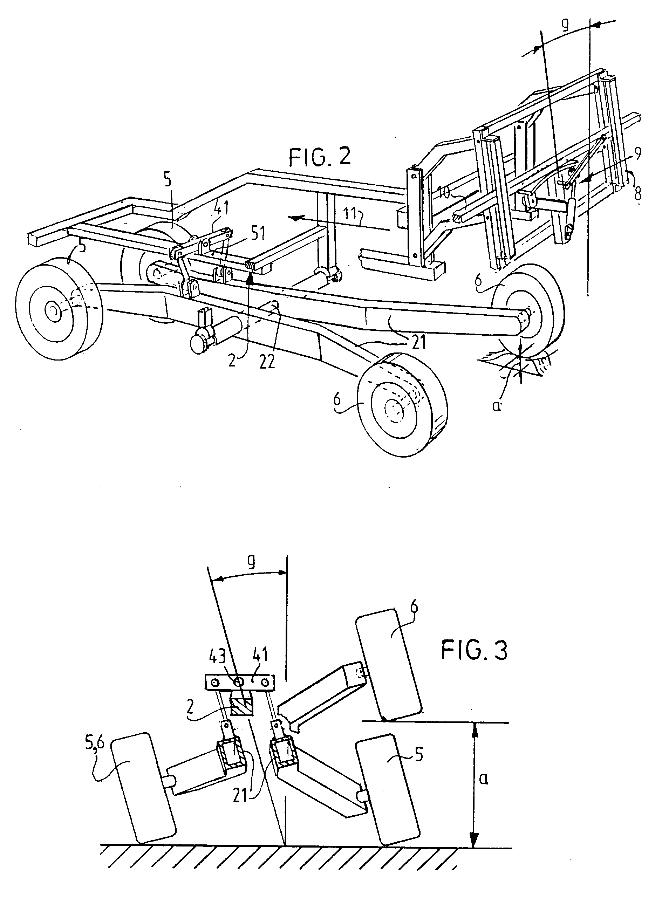

NL-A-8600830 discloses in figures 2-5 a spreader device which comprises a spreader boom directed transversely of the travel direction and carried by a frame and comprises prevention means for holding the frame orientated during travel over ground irregularities; wherein prevention means for holding the frame parallel to the momentary travel direction comprise on each side of the frame a subframe to which the front wheel and rear wheel disposed on the relevant side are rotatably mounted, which subframe is mounted on the frame for pivoting around an horizontal transverse shaft and wherein the subframes are mutually coupled by means of a transversely oriented pivoting balance beam, the middle piece of which is fixed to the frame for pivoting around an axis extending substantially in the horizontal travel direction, wherin the balance beam is pivotally connected to each of the two subframes and wherein the subframes are slidable relative to the horizontal transverse shaft in lengthwise direction thereof.

This spreading device is only applicable on grass fields with wheels driving over the grass and on fields comprising plant rows with a particular mutual distance corresponding to the mutual distance of the wheels of the spreading device. Fields comprising plant rows with other mutual distances can not be treated with this spreading device.

According to the invention it is discovered that the kind of agricultural vehicle disclosed in FR-A-2183416 is also applicable as a spreader device having the condition of the spreader boom to be maintained in a transverselly directed and horizontal position. Such agricultural vehicle according to the invention is described in claim 1.

The invention will be elucidated in the description following hereinafter with reference to a drawing. In the drawing in schematic form:
Fig. 1 shows a side view of a preferred self-propelling spreader device according to the invention;
Fig. 2 shows a perspective, schematically broken away view of the spreader device of fig. 1;
Fig. 3 shows a partially broken away end view of the spreader device of fig. 1 in an exaggeratedly drawn position;
Fig. 4a, 4b and 4c show the spreader device of fig. 1 in three schematic views in two different positions;
Fig. 5 shows an exploded view of a part of the spreader device of fig. 1;
Fig; 5a shows detail V of fig. 2 on a larger scale;
Fig. 6 shows on a smaller scale the spreader device of fig. 1 during spreading;
Fig. 7 shows details of fig. 6 on a larger scale;
Fig. 8A-8C show schematic top views of the spreader device of fig. 1 according to the invention during track width adjustment, and
Fig. 9 is a schematic perspective view of a spreader device known substantially from the British patent specification 2046563.

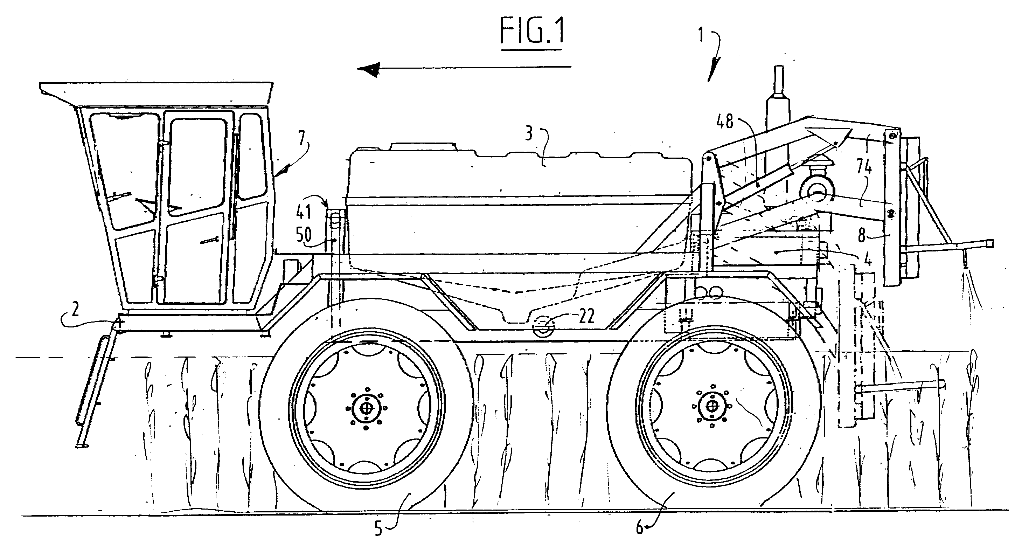

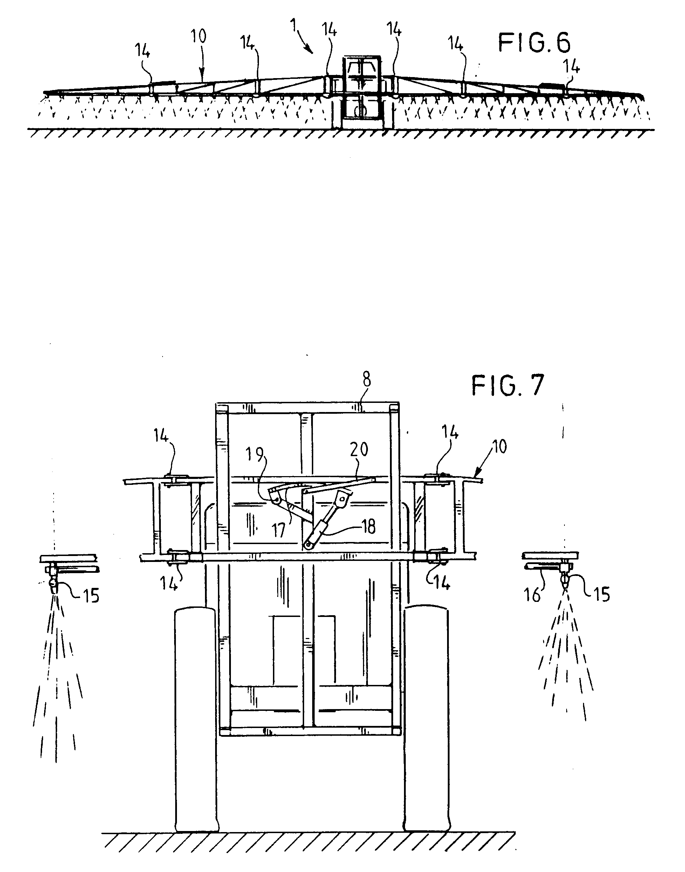

The spreader device 1 of fig. 1-8, which is an agricultural vehicle according to the invention, has a self-moving frame 2 which carries:
a tank 3 for receiving the liquid for spreading, for example water, which may or may not be provided with artificial fertilizers, ground disinfectant or disease preventing agents or insecticides;
a drive motor which drives the front wheels 5 and the rear wheels 6 by means of hydraulic motors 64;
a driver's cab 7;
pumps (not drawn) driven by the motor 4 for a hydraulic drive system and for circulating the liquid for spreading; and
a spreader boom carrier 8 which in turn carries via a balancing device 9 a spreader boom 10 which is oriented horizontally and transversely of the travel direction 11. The spreader boom 10 can be folded together by means of hinge joints 14 but during operation is an elongate boom with a plurality of spray nozzles 15 distributed along its length (see fig. 7), which are connected to a pump via a conduit system 16. The spreader boom 10 is guided on the spreader boom carrier 8 such that it cannot pivot around a vertical axis relative to carrier 8 but is movable in the vertical plane relative to the carrier 8.

The spreader boom 10 lies on a guide quadrant 17 which is adjustable relative to the carrier 8 by means of an adjusting motor 18, that is, pivotable around a horizontal longitudinal shaft 19. The spreader boom 10 is further fixedly held relative to the carrier 8 by means of a pivot rod 20. This balancing device 9 keeps the spreader boom 10 continually horizontal.

The front wheel 5 and the rear wheel 6 arranged on the same side of the frame 2 are rotatably mounted on a longitudinal beam 21 which in the middle is fixed to the frame 2 for pivoting about a horizontal transverse shaft 22. All the wheels 5, 6 can further be simultaneously controlled in a manner described hereinbelow with steering means, because they are fixed to the longitudinal beams 21 for pivoting around vertical swivel pins 24. The wheels 5, 6 are driven for example with hydraulic motors 26 from the motor 4.

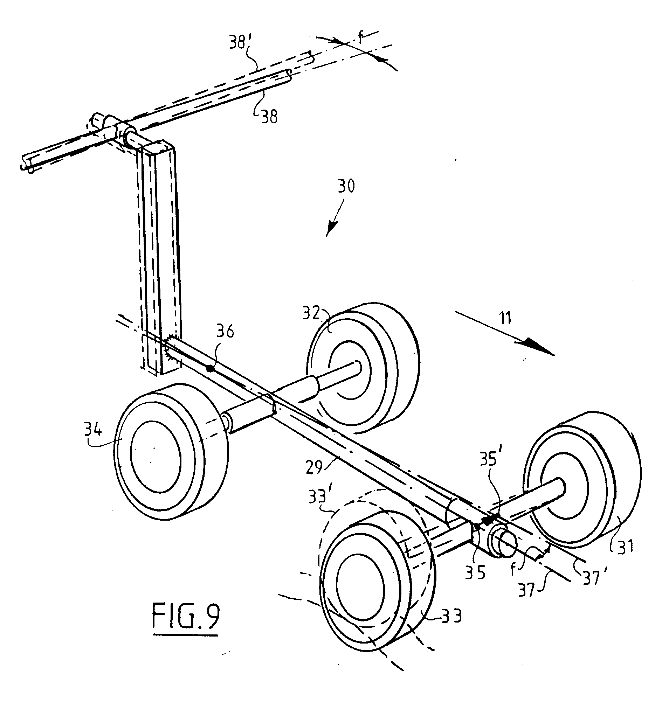

If in a known spreader device 30 as in fig. 9 with four wheels 31, 32, 33 and 34, the one wheel 33 is lifted into the position 33' drawn with dashed lines when driving over a bump, a leading point 35 of the frame 29 is displaced slightly sideways to the point 35', while the rear point 36 of the frame 2 remains practically in position. The longitudinal axis 37 hereby swivels through an angle f into the position of longitudinal axis 37' with the result that the spreader boom 38 coupled thereto pivots into the position 38'. This continuous pivoting when driving over irregular agricultural land results in non-uniform distribution of the material (liquid) over the ground while driving in travel direction 11.

In order to avoid uneven spreading the spreader device 1 according to the invention is provided with prevention means 40 which consist in fig. 1-8 of the longitudinal beams 21. In order to support the frame 2 on the longitudinal beams 21 in a particular manner, the longitudinal beams 21 are mutually coupled by means of a balance beam 41 pivotable around a horizontal longitudinal shaft 43 relative to the frame 2. The balance beam 41 is a transverse lever which is connected to the longitudinal beams 21 by means of downwardly directed pivot rods 50 and ball joints 44 (or rubber blocks) and which is bearing mounted in a central support 51 of the frame 2.

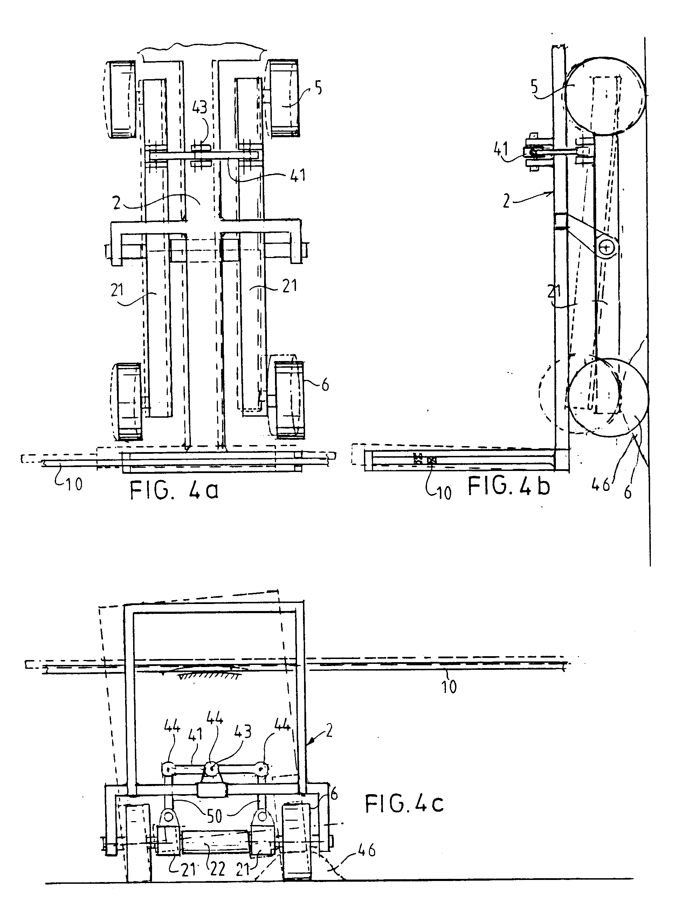

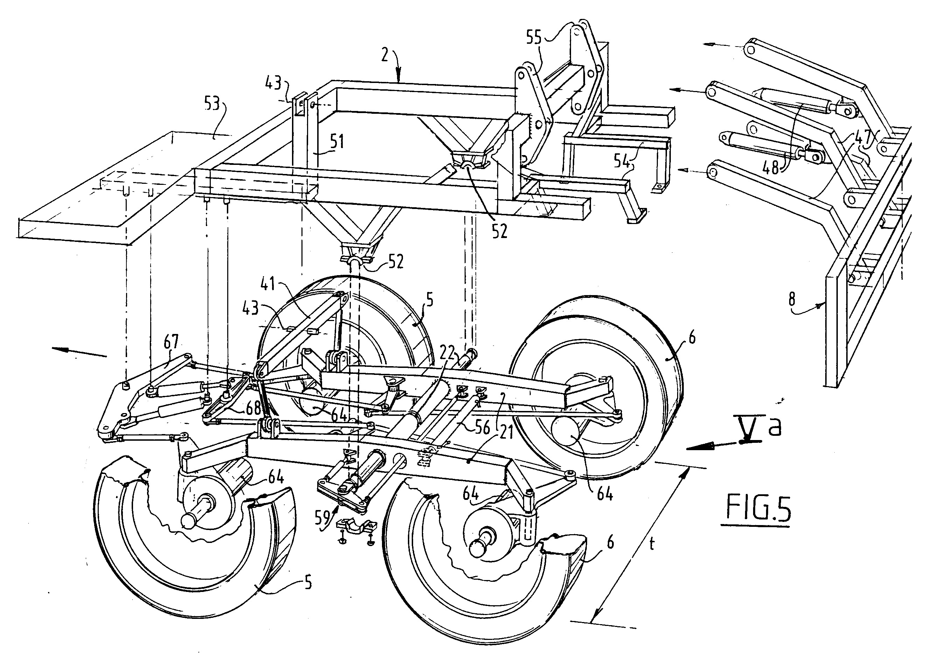

Shown in fig. 4a, 4b and 4c is the displacement of the various elements of the spreader device 1 from the position drawn with continuous lines to the position drawn with dashed lines in which the right rear wheel 6 travels over a bump 46.

Fig. 4a shows that the spreader boom 10 remains parallel to itself.

In fig. 2 and 3 the right rear wheel 6 is raised a great distance a, for example when driving over a bump 46. Both left-hand wheels 5 and 6 remain exactly in line whereby the frame 2 remains parallel to its own longitudinal axis, with the result that, just as the frame 2, the spreader boom 10 does not relative to its own direction, despite the fact that the frame 2 tilts through a considerable angle g in the vertical transverse plane of fig. 3.

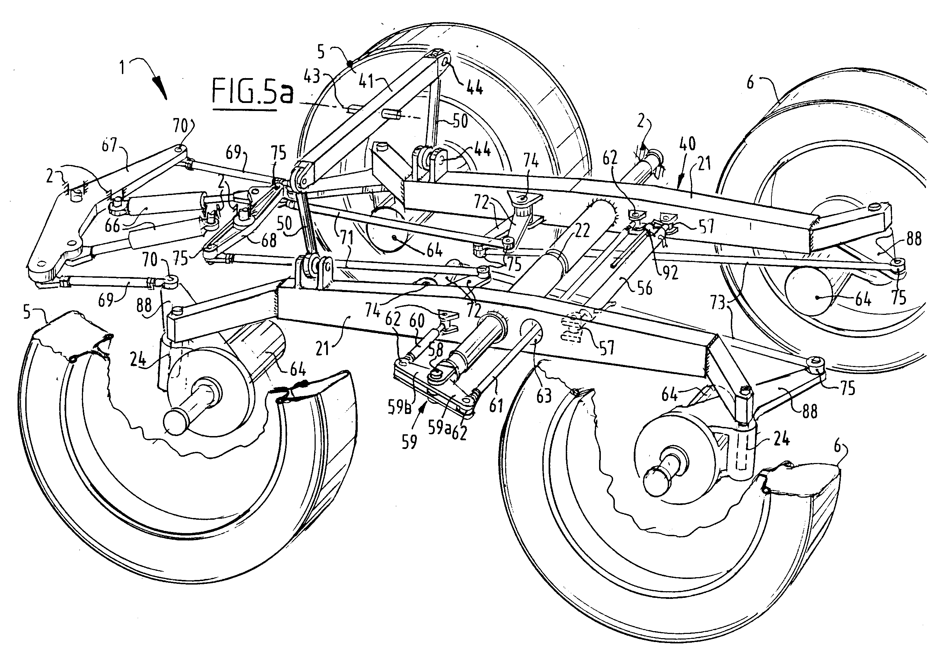

Fig. 5 shows the window-like frame 2 which supports pivotally on the ends of the shaft 22 by means of bearings 52 and which has a platform 53 for carrying a cab as well as motor supports 54 and supports 55 for the spreader boom carrier 8, which is fixed level-adjustably to the frame 2 by means of parallelogram pivot arms 47 and hydraulic cylinders 48.

The longitudinal beams 21 are arranged on the shaft 22 not only for pivoting but also for sliding in transverse direction. Serving for this purpose is a hydraulic jack 56 which engages onto the longitudinal beam 21 with ball joints 57. Mounted on the left-hand end of the shaft 22 is a swivel lever 59, the arms 59a and 59b of which are of equal lengths. The swivel lever 59 is connected to the longitudinal beams 21 via pivot rods 60 and 61 and ball joints 62. The pivot rod 61 passes through a spacious hole 63 of the left-hand transverse beam 21. Due to this mutual connecting of the longitudinal beams 21 these beams 21 are displaced in symmetrical manner relative to the central longitudinal plane of the spreader device 1, when the track width t is altered by means of the jack 56.

The spreader device 1 is controlled by means of hydraulic cylinders 66 which engage onto control levers 67 and 68 pivotally mounted to the frame 2. Steering arms 88 of front wheels 5 are connected to control lever 67 via control rods 69 and ball joints 70. Steering arms 88 of rear wheels 6 are coupled to control lever 68 by means of control rods 71, by means of V-shaped levers 72 arranged on longitudinal beams 21 for pivoting round line pivots 74 and by means of control rods 73, wherein the necessary ball joints 75 are applied.

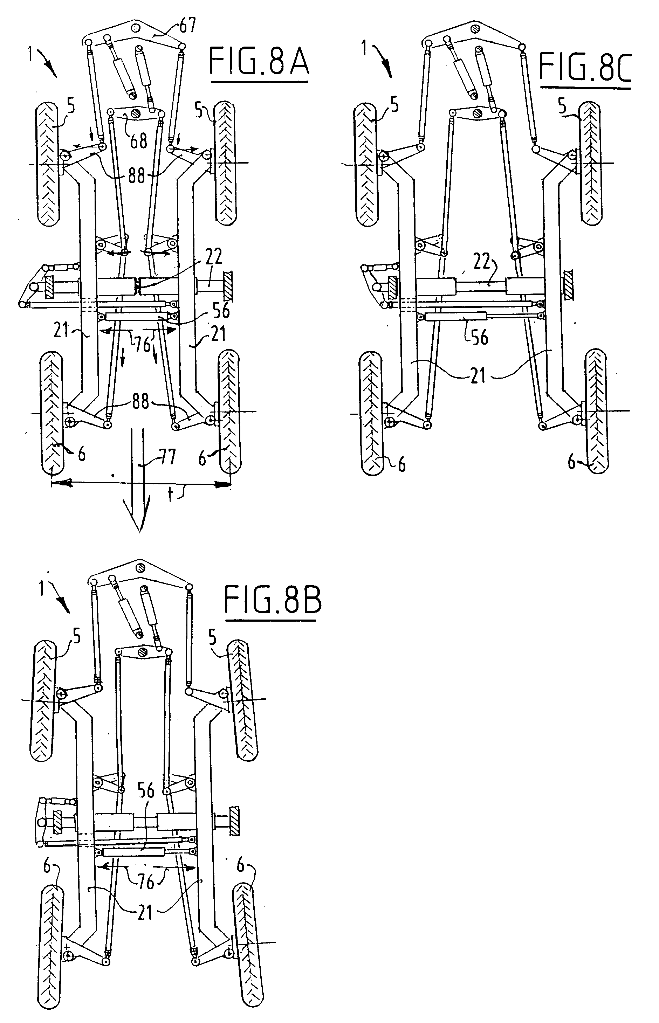

Fig. 8A-8C show that while the track width t is being enlarged the jack 56 is energized to press the longitudinal beams 21 apart according to arrows 76 and that the spreader device 1 is driven backwards according to the arrow 77 from the position in fig. 8A to the position of fig. 8B as the steering arms 88 are displaced outward when the control levers 67 and 69 are held fixedly, with the result that the wheels 5, 6 assume the slightly slanting position shown in fig. 8B. Due to the rearward travel of the spreader device 1 the forces required of the jack 56 are moderate. When the distance t is further enlarged the wheels 5, 6 come to stand in the travel direction as according to fig. 8C. The wheel positions of fig. 8B are drawn at an exaggerated slant. In practice the slightly slanting wheel positions are not problematic.

It is noted that the track width t can also be made variable in other agricultural vehicles wherein for example longitudinal beams 21 are applied which do not pivot around a shaft 22. Use can be made of mechanical, electrical, pneumatic or hydraulic motor means to adjust the track width. The spreader device 1 can be used when working fields with various track widths t of for example
t = 150 (2 X 75 or 3 X 50);
t = 180 (2 X 90);
t = 200 (4 X 50); or
t = 225 (3 X 75)
and also when spraying sunflowers which already have a considerable growing height.

Owing to the four wheel control the spreader device 1 can also be utilized well on sloping terrain.

The agricultural vehicle can for example also be a hoeing machine.

The spreader device 1 preferably comprises a pick-up 92 for measuring the track width t. A pick-up 92 is for instance present on the jack 56, which records the jack stroke and thereby the track width t. This pick-up is then connected to an indicator which is arranged in the cab or is visible from the cab 7.

## Claims

1. Agricultural vehicle having a frame (2) comprising on each of its sides a subframe (21) to which the front wheel (5) and the rear wheel (6) disposed on the relevant side are rotatably mounted, said frame (2) comprising at least one horizontal transverse shaft (22) for guiding a slidable relative movement of said subframes (21), motor means (56) adjusting the track width t by driving said subframes (21) relative to each other in the transverse direction of said transverse shaft (22), **characterized in that** the agricultural vehicle is a spreader device (1) which comprises at least one spreader boom (10) directed transversely of the travel direction (11) and carried by the frame (2) and comprises prevention means (21, 22, 41, 43, 50) for holding the frame (2) orientated during travel over ground irregularities (46); that said subframes (21) form part of prevention means for holding the frame (2) parallel to the momentary travel direction (11), said subframes (21) being mounted on the frame (2) for pivoting around an horizontal transverse shaft (22); that the subframes (21) are mutually coupled by means of transversely oriented pivoting balance beam (41), the middle piece of which is fixed to the frame (2) for pivoting around an axis (43) extending substantially in the horizontal travel direction, wherein the balance beam (41) is pivotally connected to each of the two subframes (21) and that the subframes (21) are slidable relative to said horizontal transverse shaft (22) in lengthwise direction thereof by means of said motor means (56).

2. Agricultural vehicle as claimed in claim 1, **characterized by** adjusting means (56, 54, 60, 61) which displace the left-hand wheels (5, 6) substantially just as far outward or inward as the right-hand wheels (5, 6).

3. Agricultural vehicle as claimed in claim 2, **characterized in that** arms (59a, 59b) of a lever (59) pivotable relative to the vehicle chassis about a shaft (58) extending in a vertical plane which extends in driving direction of said vehicle, said arms (59a, 59b) having an equal length, are coupled to subframes (21) adjustable in transverse direction and supported by the wheels (5, 6).

4. Agricultural vehicle as claimed in any of the foregoing claims, **characterized in that** at least one control lever (67, 68) is coupled to steering arms (88) of wheels (5, 6) via control rods (69, 71, 73) extending substantially in lengthwise direction of the vehicle (1).

5. Agricultural vehicle as claimed in any of the preceding claims, **characterized in that** the balance beam (41) is coupled to the subframes (21) via downwardly directed pivot rods (50).

## Patentansprüche

1. Landwirtschaftliches Fahrzeug mit einem Rahmen (2), der an jeder seiner Seiten einen Hilfsrahmen (21) aufweist, an welchem das Vorderrad (5) und das Hinterrad (6) an der relevanten Seite angeordnet drehbar befestigt sind, wobei der Rahmen (2) wenigstens eine horizontale Querachse (22) zum Führen einer relativen Gleitbewegung der Hilfsrahmen (21) und ein Motormittel (56) zum Einstellen der Spurweite t durch Antreiben der Hilfsrahmen (21) relativ zueinander in der Querrichtung der Querachse (22) aufweist, dadurch gekennzeichnet, daß das landwirtschaftliche Fahrzeug eine Verteilvorrichtung (1) ist, die wenigstens einen quer zu der Fahrtrichtung (11) ausgerichteten und von dem Rahmen (2) getragenen Verteilausleger (10) und Verhinderungsmittel (21, 22, 41, 43, 50) zum Ausgerichtethalten des Rahmens (2) während der Fahrt über Bodenunebenheiten aufweist; daß die Hilfsrahmen (21) einen Teil der Verhinderungsmittel zum Halten des Rahmens (2) parallel zu der momentanen Fahrtrichtung (11) bilden, wobei die Hilfsrahmen zum Schwenken um eine horizontale Querachse (22) an dem Rahmen (2) befestigt sind; daß die Hilfsrahmen (21) mit Hilfe eines querausgerichteten Ausgleichsschwenkbalkens (41) gegenseitig gekuppelt sind, dessen Mittelteil an dem Rahmen (2) zum Schwenken um eine im wesentlichen in der horizontalen Fahrtrichtung verlaufende Achse (43) befestigt ist, wobei der Ausgleichsbalken (41) an jeden der beiden Hilfsrahmen (21) schwenkbar angeschlossen ist, und daß die Hilfsrahmen (21) relativ zu der horizontalen Querachse (22) in deren Längsrichtung mit Hilfe des Motormittels (56) verschiebbar sind.

2. Landwirtschaftliches Fahrzeug nach Anspruch 1, gekennzeichnet durch Einstellmittel (56, 54, 60, 61), von welchen die linken Räder (5, 6) im wesentlichen genausoweit nach außen oder nach innen verstellt werden wie die rechten Räder (5, 6).

3. Landwirtschaftliches Fahrzeug nach Anspruch 2, dadurch gekennzeichnet, daß sich Arme (59a, 59b) eines Hebels (59), der relativ zu dem Fahrgestell um eine in vertikaler Ebene verlaufende Achse (58) schwenkbar ist, in der Fahrtrichtung des Fahrzeugs erstrecken, wobei die gleiche Länge aufweisenden Arme (59a, 59b) an die Hilfsrahmen (21) gekuppelt sind, die in Querrichtung einstellbar und von den Rädern (5, 6) abgestützt sind.

4. Landwirtschaftliches Fahrzeug nach einem der vorangehenden Ansprüche, dadurch gekennzeichnet, daß wenigstens ein Steuerhebel (67, 68) an Lenkhebel (88) der Räder (5, 6) über im wesentlichen in Längsrichtung des Fahrzeuges (1) verlaufende Steuerstangen (69, 71, 73) angeschlossen ist.

5. Landwirtschaftliches Fahrzeug nach einem der vorangehenden Ansprüche, dadurch gekennzeichnet, daß der Ausgleichsbalken (41) an die Hilfsrahmen (21) über nachuntengerichtete Lenker (50) angeschlossen ist.

## Revendications

1. Véhicule agricole ayant un châssis (2) comportant sur chacun de ses côtés un sous-châssis (21) sur lequel la roue avant (5) et la roue arrière (6) agencées sur le côté concerné sont montées de manière rotative, ledit châssis (2) comportant au moins un arbre transversal horizontal (22) destiné à guider un mouvement relatif coulissant desdits sous-châssis (21), des moyens formant moteur (56) réglant la largeur d'empattement t en entraînant lesdits sous-châssis (21) l'un par rapport à l'autre dans la direction transversale dudit arbre transversal (22), caractérisé en ce que le véhicule agricole est un dispositif de pulvérisation (1) qui comporte au moins une perche (10) de pulvérisation dirigée transversalement à la direction de déplacement (11) et supportée par le châssis (2) et comporte des moyens de prévention (21, 22, 41, 43, 50) destinés à maintenir orienté le châssis (2) pendant le déplacement sur des irrégularités du sol (46); et en ce que lesdits sous-châssis (21) forment une partie des moyens de prévention destinés à maintenir le châssis (2) parallèle à la direction momentanée de déplacement (11), lesdits sous-châssis (21) étant montés sur le châssis (2) pour pivoter autour d'un arbre transversal horizontal (22); en ce que les sous-châssis (21) sont reliés mutuellement à l'aide d'une poutre (41) d'équilibrage pivotante orientée transversalement, dont la partie médiane est fixée au châssis (2) pour pivoter autour d'un axe (43) s'étendant à peu près dans la direction de déplacement horizontal, dans lequel la poutre (41) d'équilibrage est reliée de manière pivotante à chacun des deux sous-châssis (21), et en ce que les sous-châssis (21) peuvent coulisser par rapport audit arbre transversal horizontal (22) dans la direction de la longueur de celui-ci à l'aide desdits moyens formant moteur (56).

2. Véhicule agricole selon la revendication 1, caractérisé en ce que des moyens de réglage (56, 54, 60, 61) qui déplacent les roues gauches (5, 6) à peu près juste aussi loin vers l'extérieur ou vers l'intérieur que les roues droites (5, 6).

3. Véhicule agricole selon la revendication 2, caractérisé en ce que des bras (59a, 59b) d'un levier (59) pouvant pivoter par rapport au châssis du véhicule autour d'un arbre (58) s'étendant dans un plan vertical qui s'étend dans la direction d'entraînement dudit véhicule, lesdits bras (59a, 59b) ayant une longueur égale, sont reliés aux sous-châssis (21) en pouvant être ajustés dans la direction transversale et sont supportés par les roues (5, 6).

4. Véhicule agricole selon l'une quelconque des revendications précédentes, caractérisé en ce qu'au moins un levier de commande (67, 68) est relié aux bras de direction (88) des roues (5, 6) via des tiges de commande (69, 71, 73) s'étendant à peu près dans la direction de la longueur du véhicule (1).

5. Véhicule agricole selon l'une quelconque des revendications précédentes, caractérisé en ce que la poutre d'équilibrage (41) est reliée aux sous-châssis (21) via des tiges de pivotement (50) dirigées vers le bas.
